(19) **Europäisches Patentamt / European Patent Office / Office européen des brevets**

(11) **EP 1 652 825 B1**

(12) **EUROPEAN PATENT SPECIFICATION**

(45) Date of publication and mention
of the grant of the patent:
**15.09.2010 Bulletin 2010/37**

(51) Int Cl.:
*C02F 5/10* (2006.01)     *C08F 220/00* (2006.01)
*C02F 1/56* (2006.01)     *C11D 3/37* (2006.01)

(21) Application number: **05023748.6**

(22) Date of filing: **31.10.2005**

(54) **Method for producing Hydrophobically modified polymers**

Verfahren zur Herstellung von Hydrophob modifizierten Polymere

Procédé de fabrication des Polymères hydrophobes modifiées

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.11.2004 US 979019**

(43) Date of publication of application:
**03.05.2006 Bulletin 2006/18**

(60) Divisional application:
**08002212.2 / 1 947 062**
**08002215.5 / 1 918 256**

(73) Proprietor: **Akzo Nobel N.V.**
**6824 BM Arnhem (NL)**

(72) Inventor: **Rodrigues, Klein A.**
**Signal Mountain,**
**Tennessee 37377 (US)**

(74) Representative: **Schalkwijk, Pieter Cornelis et al**
**Akzo Nobel N.V.**
**Department Legal & IP**
**P.O. Box 9300**
**6800 SB Arnhem (NL)**

(56) References cited:
| | |
|---|---|
| EP-A- 0 676 422 | EP-A1- 0 869 169 |
| EP-A2- 0 398 724 | EP-A2- 1 088 794 |
| EP-A2- 1 346 957 | EP-A2- 1 362 907 |
| DE-A1- 4 328 817 | US-A- 5 232 622 |
| US-A- 5 650 473 | US-A1- 2003 072 950 |
| US-A1- 2004 053 808 | US-A1- 2004 106 534 |
| US-A1- 2004 186 039 | US-B1- 6 340 664 |
| US-B2- 6 617 302 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an aqueous process free of non-aqueous solvents, for producing hydrophobically modified polymers. invention also relates to anti-scalant and/or dispersant formulations or compositions.

Many aqueous industrial systems require various materials to remain in a soluble, suspended or dispersed state. Examples of such aqueous systems include boiler water or steam generating systems, cooling water systems, gas scrubbing systems, pulp and paper mill systems, desalination systems, fabric, dishware and hard surface cleaning systems, as well as downhole systems encountered during the production of gas, oil, and geothermal wells. Often the water in those systems either naturally or by contamination contains ingredients such as inorganic salts. These salts can cause accumulation, deposition, and fouling problems in aqueous systems such as those mentioned above.

The inorganic salts are typically formed by the reaction of metal cations such as calcium, magnesium or barium with inorganic anions such as phosphate, carbonate and sulfate. When formed, the salts tend to be insoluble or have low solubility in water. As their concentration in solution increases or as the pH and/or temperature of the water containing those salts changes, the salts can precipitate from solution, crystallize and form hard deposits or scale on surfaces. Such scale formation is a problem in equipment such as heat transfer devices, boilers, secondary oil recovery wells, and automatic dishwashers, as well as on substrates washed with such hard waters, reducing the performance and life of such equipment.

In addition to scale formation many cooling water systems made from carbon steel, including industrial cooling towers and heat exchangers, experience corrosion problems. Attempts to prevent this corrosion are often made by adding various inhibitors such as orthophosphate and/or zinc compounds to the water. However, phosphate addition increases the formation of highly insoluble phosphate salts such as calcium phosphate. The addition of zinc compounds can lead to the precipitation of insoluble salts such as zinc hydroxide and zinc phosphate.

Other inorganic particulates such as mud, silt and clay can also be commonly found in cooling water systems. These particulates tend to settle onto surfaces, thereby restricting water flow and heat transfer unless they are effectively dispersed.

Stabilization of aqueous systems containing scale-forming salts and inorganic particulates involves a variety of mechanisms. Inhibition is the conventional mechanism for eliminating the deleterious effect of scale-forming salts. In inhibition polymer(s) are added that increase the solubility of the scale-forming salt in the aqueous system.

Another stabilization mechanism is the dispersion of precipitated salt crystals. Polymers having carboxylic acid groups function as good dispersants for precipitated salts such as calcium carbonates. In this mechanism, the crystals stay dispersed rather than dissolving in the aqueous solution. As a result, the precipitated salts can still contact various surfaces and build up thereon. Hence, dispersion is not a preferred mechanism for minimizing the deleterious effect of insoluble salts.

A third stabilization mechanism involves interference and distortion of the crystal structure of the scale by the polymer, thereby making the scale less adherent to surfaces, other forming crystals or existing particulates. Polymers according to the present invention have been found to be particularly useful in minimizing scale by this latter mechanism, *i.e.,* crystal growth modification.

Polymers can also impart many useful functions in cleaning compositions. For example, they can function either independently or concurrently as viscosity reducers in processing powdered detergents. They can also serve as anti-redeposition agents, dispersants, scale and deposit inhibitors, crystal modifiers, and/or detergent assistants capable of partially or completely replacing materials used as builders while imparting optimum detergent action properties to surfactants.

Cleaning formulations contain builders such as phosphates and carbonates for boosting their cleaning performance. These builders can precipitate out insoluble salts such as calcium carbonate and calcium phosphate in the form of calcium orthophosphate. The precipitants form deposits on clothes and dishware that results in unsightly films and spots on these articles. Similarly, insoluble salts cause major problem in down hole oil field applications. Hence, there is a need for polymers that will minimize the scaling of insoluble salts in water treatment, oil field and cleaning formulations.

It is generally recognized that polymers containing sulfonate moieties are required for calcium phosphate scale inhibition. These polymers typically contain some carboxylate functionality, too. For example, United States Patent Nos. 5,547,612, 5,698,512, 4,711,725, 6,114,294, 6,395,185, 6,617,302 and International Publication No. WO 2004/061067 disclose the use of sulfonated polymers for inhibiting phosphate scale primarily in the form of orthophosphate. United States Patent No. 6,617,302 describes the use of a hydrophobically modified polymer for rheology modification. Due to the high molecular weight required for rheology modification, these polymers do not inhibit phosphate scale. Further, polymers containing sulfonic acid groups are costly. Hence, there is a need for polymers that inexpensively inhibit calcium phosphate scale

It is also recognized that polymers containing carboxylic acid groups function well at inhibiting calcium carbonate. Generally speaking, the greater the amount of carboxylate functionality, the greater the amount of calcium carbonate inhibition that is provided. However, in most environments the amount of scale present is usually greater than the amount the polymer can inhibit. Hence, there is a need for polymers that can minimize calcium carbonate scale by crystal growth modification.

Surprisingly, it has been found that hydrophobically modified polymers function in calcium phosphate inhibition in aqueous treatment compositions. Further, such polymers also function in crystal growth modification of calcium carbonate scale in these systems. These polymers also function in inhibiting sulfate scale in aqueous treatment compositions, as well as dispersing hydrophobic minerals in aqueous systems.

United States Patent Nos. 5,866,076, 5,789,571 and 5,650,473 and United States Publication No. 2003/072950 describe various processes for producing hydrophobically modified polymers in a mixture of both water and a water miscible solvent. In contrast, the present invention teaches a completely aqueous process for producing these polymers. This aqueous process eliminates solvent usage, thereby providing a process that is environmentally friendly and effective in saving time and money.

The present invention discloses an aqueous process, free of non-aqueous solvents, for producing hydrophobic polymers effective at minimizing a number of different scales, including phosphate, sulfonate, carbonate and silicate based scales. These scale-minimizing polymers are useful in a variety of systems, including water treatment compositions, oil field related compositions such as cement compositions, cleaning formulations and other aqueous treatment compositions.

The present invention relates to an aqueous process for producing these hydrophobically modified copolymers. These polymers can be produced by a completely aqueous (non-solvent) based process wherein the molecular weight of the polymer is controlled so that relatively low molecular weight polymers are produced. The polymers are produced in the aqueous process by neutralizing the polymer as it is being produced.

In other words, the present invention provides for a solvent-free aqueous process for producing hydrophobic copolymers. According to this aqueous process, free of non-aqueous solvents, two or more monomers are simultaneously or at the same time added to an aqueous system. At least one monomer is at least one hydrophilic acid monomer and at least one monomer is a hydrophobic monomer, wherein the at least one hydrophilic acid monomer is either a polymerizable carboxylic acid or sulfonic acid functionality but not both. The system can be initiated by free radical polymerization of the two or more monomers.

The free radical polymerization can occurs in the presence of one or more bases whereby the acid monomer functionality is partially or completely neutralized. The bases can be added at the beginning of the reaction, thereby neutralizing the polymer as it is produced. In another aspect, polymerization can occur in the presence of one or more hydrotropes and/or one or more chain transfer agents. Suitable hydrotropes include propylene glycol, xylene sulfonic acid, cumene sulfonic acid and combinations thereof.

When polymerization is carried out in the presence of one or more chain transfer agents, the chain transfer agents can be mercaptan and/or phosphorus-based.

Polymerization can also be carried out in the presence of a catalyst capable of liberating free radicals.

The hydrophobic copolymers produced are low molecular weight polymers having a number average molecular weight of less than 25,000.

Since solvents are not used, the process is environmentally friendly. Furthermore, it is economical since you do not need to use and recycle the solvent. This saves processing time since the solvent does not have to be removed at the end of the process and thus produces additional cost savings.

The hydrophobically modified polymers of the present invention provide excellent scale inhibition and deposition control under a wide variety of conditions. For instance; the inventive polymers have been found to inhibit phosphate scale formation and deposition.

In treating cooling water, phosphonates and low molecular weight homopolymers tend to be the primary calcium carbonate inhibitors. However, these additives may not be enough under stressed conditions. Therefore there is a need for a polymer that can act as a crystal growth modifier for crystals formed in stressed conditions. Inhibitors previously mentioned may not be completely effective. The composition and molecular weight of the inventive polymers are such that they can act as a crystal modifier, thereby contributing to minimizing calcium carbonate scaling. Furthermore, the inventive polymers are effective at minimizing sulfate scale in oil field treatment applications.

The hydrophobically modified polymers are also highly effective at dispersing particulate matter such as minerals, clays, salts, metallic ores and metallic oxides. Specific examples include talc, titanium dioxide, mica, silica, silicates, carbon black, iron oxide, kaolin clay, titanium dioxide, calcium carbonate and aluminum oxide. These particulates can be found in a variety of applications such as coatings, plastics, rubbers, filtration products, cosmetics, food and paper coatings.

The hydrophobically modified polymers are prepared from at least one hydrophilic acid monomer and at least one hydrophobic monomer. The at least one hydrophilic acid monomer can be a polymerizable carboxylic or sulfonic acid containing monomer. Examples of polymerizable carboxylic or sulfonic acid containing monomers include acrylic acid, methacrylic acid, ethacrylic acid, $\alpha$-chloro-acrylic acid, $\alpha$-cyano acrylic acid, $\beta$-methyl-acrylic acid (crotonic acid), α-phenyl acrylic acid, β-acryloxy propionic acid, sorbic acid, α-chloro sorbic acid, angelic acid, cinnamic acid, p-chloro cinnamic acid, β-styryl acrylic acid (1-carboxy-4-phenyl butadiene-1,3), itaconic acid, maleic acid, citraconic acid, mesaconic acid, glutaconic acid, aconitic acid, fumaric acid, tricarboxy ethylene, 2-acryloxypropionic acid, 2-acrylamido-2-methyl propane sulfonic acid, vinyl sulfonic acid, sodium methallyl sulfonate, sulfonated styrene, allyloxybenzene sulfonic acid, maleic acid, and maleic anhydride. Moieties such as maleic anhydride or acrylamide that can be derivatized to an acid containing group can be used. Combinations of acid containing hydrophilic monomers can also be used provided they are either carboxylic acid or sulfonic acid monomers. In one aspect the acid containing hydrophilic monomer is acrylic acid, maleic acid, itaconic acid or mixtures thereof.

The hydrophilic portion of the polymer can also be generated from a water soluble chain transfer agent in addition to the hydrophilic acid monomers described above. Water soluble chain transfer agents that can be used include short chain mercaptans, e.g., 3-mercaptopropionic acid, 2-mercaptoethanol and so forth, as well as phosphorus-based chain transfer agents such as phosphoric acid and sodium hypophosphite.

The hydrophobic monomers are selected from among styrene, α-methyl styrene, methyl methacrylate, methyl acrylate, 2-ethylhexyl acrylate, octyl acrylate, lauryl acrylate, stearyl acrylate, behenyl acrylate, 2-ethylhexyl methacrylate, octyl methacrylate, lauryl methacrylate, stearyl methacrylate, behenyl methacrylate, 2-ethylhexyl acrylamide, octyl acrylamide, lauryl acrylamide, stearyl acrylamide, behenyl acrylamide, propyl acrylate, butyl acrylate, pentyl acrylate, hexyl acrylate, 1-vinyl naphthalene, 2-vinyl naphthalene, 3-methyl styrene, 4-propyl styrene, t-butyl styrene, 4-cyclohexyl styrene, 4-dodecyl styrene, 2-ethyl-4-benzyl styrene, and 4-(phenyl butyl) styrene. Combinations of hydrophobic monomers can also be used.

The hydrophobic monomer is present in an amount of from 1 mole % to 80 mole %.

In the present invention a completely aqueous (solvent free) process is used to produce these hydrophobically modified copolymers. One familiar with polymerizations will appreciate this process due to the water insolubility of the hydrophobic monomers. Without being bound by theory, it is believed that these polymers can be produced in a completely aqueous (non-solvent) based process by controlling the molecular weight of the polymer so that relatively low molecular weight polymers are produced. Alternatively, these polymers can be produced aqueously by neutralizing the polymer as it is produced, thereby keeping the polymer soluble as it forms. This process is environmentally friendly since solvents are not being used. The lack of solvents also makes this process more economical as the solvent removal reduces the costs, including the costs of recycling the solvent. This aqueous process also saves processing time since the solvent does not have to be removed at the end of the process, thereby providing additional cost savings.

As noted above, the polymers are kept soluble as they are formed in this novel aqueous process. One way to do so is by producing low molecular weight polymers. These low molecular weight polymers can have a number average molecular weight of less than 25,000. In another aspect, the low molecular weight polymers have a number average molecular weight of less than 10,000. One skilled in the art will understand that this can be achieved by a number of methods. For example, a chain transfer agent can be used. Also, high temperatures and/or monomers that are sluggish or subject to chain transfer can be used. Common chain transfer agents include mercaptans or thiols and phosphorus based materials such as phosphorus acid and its salts such as sodium and potassium hypophosphite. Mercaptans include 3-mercapto propionic acid or 2-mercapto ethanol. Reaction temperatures in the range of 80°C to 100°C or higher (under pressure) can be used. In general, the higher the reaction temperature, the lower the molecular weight polymer produced. Monomers that are sluggish to free radical polymerization can also lower molecular weights. Such monomers include but are not limited to maleic and fumaric acids, as well as monomers containing allylic groups such as allyl alcohol, sodium (meth)allyl sulfonate, etc.

The hydrophobic copolymer of this invention is produced by an aqueous process wherein the polymer is neutralized as it is formed. The acid polymers of this invention can be neutralized in this manner if the neutralizing agent is added concurrently with the monomer feeds or in the initial charge. One skilled in the art will realize that neutralizing the polymer in the manner described above can enhance its water solubility and prevent precipitation of these polymers as they are formed. Neutralizing agents can include but are not limited to bases such as NaOH, KOH and amines such as triethanolamine.

In another embodiment of this invention, the hydrophobic copolymers of this invention are made by a completely aqueous process in the presence of a hydrotrope. Hydrotropes are commonly used in liquid detergent formulations. The advantage of using hydrotropes in the present invention and/or process is that it eliminates the need for a solvent. Furthermore, it can be left in the final product without adversely affecting the end use application. Hydrotropes that can be used include polyols containing two or more hydroxyl groups such as ethylene glycol, propylene glycol, sorbitol and so forth; alkylaryl sulfonic acids and their alkali metal salts such as xylene sulfonic acid, sodium xylene sulfonates, cumene sulfonic acid, sodium cumene sulfonates; and alkyl aryl disulfonates such as the DOWFAX family of hydrotropes marketed by Dow Chemical are examples. In one aspect the hydrotropes are propylene glycol, xylene sulfonic acid and/or cumene sulfonic acid.

The architecture of the polymers can vary also, e.g., they can be block polymers, star polymers, random polymers and so forth. Obviously, polymer architecture can change the performance of the polymer in the aqueous treatment system. Polymer architecture can be controlled by synthesis procedures known in the art.

In one aspect, the hydrophilic acid monomer is present in an amount of 20 mole % to 99 mole %. In another aspect, the hydrophilic acid monomer is present in an amount of 60 mole % to 90 mole %.

In one aspect, the hydrophobic monomer is present in an amount of 1 mole % to 80 mole %. In another aspect, the hydrophobic monomer is present in an amount of 10 mole % to 40 mole %.

In one aspect, the hydrophilic acid monomer includes acrylic acid, maleic acid, itaconic acid or combinations thereof. In another aspect, the hydrophilic acid monomer includes sodium (meth) allyl sulfonate, vinyl sulfonate, sodium phenyl (meth) allyl ether sulfonate, 2-acrylamido-methyl propane sulfonic acid and combinations thereof.

In one aspect, the hydrophobic monomer includes methyl (meth) acrylate, ethyl (meth) acrylate, t-butyl (meth) acrylate, methyl (meth) acrylamide, ethyl (meth) acrylamide, t-butyl (meth) acrylamide, styrene, $\alpha$-methyl styrene and combinations thereof. In one aspect, when the pH of the aqueous system is 9 or greater, the hydrophobic monomer includes aromatics. In another aspect, when the pH of the aqueous system is 9 or greater, the hydrophobic monomer includes styrene, $\alpha$-methyl styrene and combinations thereof.

*Water Treatment Systems -*

Industrial water treatment includes prevention of calcium scales due to precipitation of calcium salts such as calcium carbonate, calcium sulfate and calcium phosphate. These salts are inversely soluble, meaning that their solubility decreases as the temperature increases. For industrial applications where higher temperatures and higher concentrations of salts are present, this usually translates to precipitation occurring at the heat transfer surfaces. The precipitating salts can then deposit onto the surface, resulting in a layer of calcium scale. The calcium scale can lead to heat transfer loss in the system and cause overheating of production processes. This scaling can also promote localized corrosion.

Calcium phosphate, unlike calcium carbonate, generally is not a naturally occurring problem. However, orthophosphates are commonly added to industrial systems (and sometimes to municipal water systems) as a corrosion inhibitor for ferrous metals, typically at levels between 2.0-20.0 mg/L. Therefore, calcium phosphate precipitation can not only result in those scaling problems previously discussed, but can also result in severe corrosion problems as the orthophosphate is removed from solution. As a consequence, industrial cooling systems require periodic maintenance wherein the system must be shut down, cleaned and the water replaced. Lengthening the time between maintenance shutdowns saves costs and is desirable.

It is advantageous to reuse the water in industrial water treatment systems as much as possible. Still, water can be lost over time due to various mechanisms, e.g., evaporation. As a consequence, dissolved and suspended solids become more concentrated over time. Cycles of concentration refers to the number of times solids in a particular volume of water are concentrated. The quality of the makeup water determines how many cycles of concentration can be tolerated. In cooling tower applications where makeup water is hard (*i.e.,* poor quality), 2 to 4 cycles would be considered normal, while 5 and above would represent stressed conditions. Hydrophobically modified polymers according to the present invention perform particularly well under stressed conditions.

One way to lengthen the time between maintenance in a water treatment system is by use of polymers that function in either inhibiting formation of calcium salts or in modifying crystal growth. Crystal growth modifying polymers alter the crystal morphology from regular structures, e.g., cubic, to irregular structures such as needlelike or florets. Because of the change in form, crystals that are deposited are easily removed from the surface simply by mechanical agitation resulting from water flowing past the surface. Hydrophobically modified polymers of the present invention are particularly useful at inhibiting calcium phosphate based scale formation such as calcium orthophosphate. Further, these inventive polymers also modify crystal growth of calcium carbonate scale.

The polymers of the present invention can be added neat to the aqueous systems, or they can be formulated into various water treatment compositions and then added to the aqueous systems. In certain aqueous systems where large volumes of water are continuously treated to maintain low levels of deposited matter, the polymers can be used at levels as low as 0.5 mg/L. The upper limit on the amount of polymer used depends upon the particular aqueous system treated. For example, when used to disperse particulate matter the polymer can be used at levels ranging from 0.5 to 2,000 mg/L. When used to inhibit the formation or deposition of mineral scale the polymer can be used at levels ranging from 0.5 to 100 mg/L, in another embodiment from 3 to 20 mg/L, and in another embodiment from 5 to 10 mg/L.

Once prepared, the hydrophobically modified polymers can be incorporated into a water treatment composition that includes the hydrophobically modified polymer and other water treatment chemicals. These other chemicals can include, e.g., corrosion inhibitors such as orthophosphates, zinc compounds and tolyltriazole. As indicated above, the amount of inventive polymer utilized in the water treatment compositions varies based upon the treatment level desired for the particular aqueous system treated. Water treatment compositions generally contain from 10 to 25 percent by weight of the hydrophobically modified polymer.

The hydrophobically modified polymers can be used in any aqueous system wherein stabilization of mineral salts is important, such as in heat transfer devices, boilers, secondary oil recovery wells, automatic dishwashers, and substrates that are washed with hard water. The hydrophobically modified polymer is especially effective under stressed conditions in which other scale inhibitors fail.

The hydrophobically modified polymers can stabilize many minerals found in water, including, but not limited to, iron, zinc, phosphonate, and manganese. The polymers also disperse particulate found in aqueous systems.

Hydrophobically modified polymers of the present invention can be used to inhibit scales, stabilize minerals and disperse particulates in many types of processes. Examples of such processes include sugar mill anti-scalant; soil conditioning; treatment of water for use in industrial processes such as mining, oilfields, pulp and paper production, and other similar processes; waste water treatment; ground water remediation; water purification by processes such as reverse osmosis and desalination; air-washer systems; corrosion inhibition; boiler water treatment; as a biodispersant; and chemical cleaning of scale and corrosion deposits. One skilled in the art can conceive of many other similar applications for which the hydrophobically modified polymer could be useful.

*Cleaning Formulations -*

The polymers of this invention can also be used in a wide variety of cleaning formulations containing phosphate-based builders. For example, these formulations can be in the form of a powder, liquid or unit doses such as tablets or capsules. Further, these formulations can be used to clean a variety of substrates such as clothes, dishes, and hard surfaces such as bathroom and kitchen surfaces. The formulations can also be used to clean surfaces in industrial and institutional cleaning applications.

In cleaning formulations, the polymer can be diluted in the wash liquor to the end use level. The polymers are typically dosed at 0.01 to 1000 ppm in the aqueous wash solutions. The polymers can minimize deposition of phosphate based scale in fabric, dishwash and hard surface cleaning applications. The polymers also help in minimizing encrustation on fabrics. Additionally, the polymers minimize filming and spotting on dishes. Dishes can include glass, plastics, china, cutlery, etc. The polymers further aid in speeding up the drying processes in these systems. While not being bound by theory, it is believed that the hydrophobic nature of these polymers aids in increasing the rate of drying on surfaces such as those described above.

Optional components in the detergent formulations include, but are not limited to, ion exchangers, alkalies, anticorrosion materials, anti-redeposition materials, optical brighteners, fragrances, dyes, fillers, chelating agents, enzymes, fabric whiteners and brighteners, sudsing control agents, solvents, hydrotropes, bleaching agents, bleach precursors, buffering agents, soil removal agents, soil release agents, fabric softening agent and opacifiers. These optional components may comprise up to 90 weight % of the detergent formulation.

The polymers of this invention can be incorporated into hand dish, autodish and hard surface cleaning formulations. The polymers can also be incorporated into rinse aid formulations used in autodish formulations. Autodish formulations can contain builders such as phosphates and carbonates, bleaches and bleach activators, and silicates. These formulations can also include enzymes, buffers, perfumes, anti-foam agents, processing aids, and so forth. Autodish gel systems containing hypochlorite bleach are particularly hard on polymers due to the high pH required to maintain bleach stability. In these systems, hydrophobes without an ester group, such as aromatics, are particularly useful.

Hard surface cleaning formulations can contain other adjunct ingredients and carriers. Examples of adjunct ingredients include, without limitation, buffers, builders, chelants, filler salts, dispersants, enzymes, enzyme boosters, perfumes, thickeners, clays, solvents, surfactants and mixtures thereof.

One skilled in the art will recognize that the amount of polymer(s) required depends upon the cleaning formulation and the benefit they provide to the formulation. In one aspect, use levels can be 0.01 weight % to 10 weight % of the cleaning formulation. In another embodiment, use levels can be 0.1 weight % to 2 weight % of the cleaning formulation.

*Oilfield Scale Application -*

Scale formation is a major problem in oilfield applications. Subterranean oil recovery operations can involve the injection of an aqueous solution into the oil formation to help move the oil through the formation and to maintain the pressure in the reservoir as fluids are being removed. The injected water, either surface water (lake or river) or seawater (for operations offshore) can contain soluble salts such as sulfates and carbonates. These salts tend to be incompatible with ions already present in the oil-containing reservoir (formation water). The formation water can contain high concentrations of certain ions that are encountered at much lower levels in normal surface water, such as strontium, barium, zinc and calcium. Partially soluble inorganic salts, such as barium sulfate and calcium carbonate, often precipitate from the production water as conditions affecting solubility, such as temperature and pressure, change within the producing well bores and topsides. This is especially prevalent when incompatible waters are encountered such as formation water, seawater, or produced water.

Barium sulfate and strontium sulfate form very hard, very insoluble scales that are difficult to prevent. Barium sulfate or other inorganic supersaturated salts can precipitate onto the formation forming scale, thereby clogging the formation and restricting the recovery of oil from the reservoir. The insoluble salts can also precipitate onto production tubing surfaces and associated extraction equipment, limiting productivity, production efficiency and compromising safety. Certain oil-containing formation waters are known to contain high barium concentrations of 400 ppm, and higher. Since barium sulfate forms a particularly insoluble salt, the solubility of which declines rapidly with temperature, it is difficult to inhibit scale formation and to prevent plugging of the oil formation and topside processes and safety equipment.

Dissolution of sulfate scales is difficult, requiring high pH, long contact times, heat and circulation, and can only be performed topside. Alternatively, milling and in some cases high-pressure water washing can be used. These are expensive, invasive procedures and require process shutdown. The hydrophobically modified polymers of this invention can minimize sulfate scales, especially downhole sulfate scales.

*Dispersant for particulates -*

Polymers according to the present invention can be used as a dispersant for pigments in applications such as paper coatings, paints and other coating applications. Examples of pigments that can be dispersed by the inventive polymers include titanium dioxide, kaolin clays, modified kaolin clays, calcium carbonates and synthetic calcium carbonates, iron oxides, carbon black, talc, mica, silica, silicates, and aluminum oxide. Typically, the more hydrophobic the pigment the better polymers according to the present invention perform in dispersing particulates. These particulate matters are found in a variety of applications, including but not limited to, coatings, plastics, rubbers, filtration products, cosmetics, food and paper coatings.

The following examples are intended to exemplify the present invention but are not intended to limit the scope of the invention in any way. The breadth and scope of the invention are to be limited solely by the claims appended hereto.

**Reference EXAMPLE 1**

Preparation of hydrophobically modified polymer containing 82 mole % acrylic acid and 18 mole % styrene

An initial charge of 150 g of deionized water and 120 g of isopropyl alcohol was added to a 1 liter glass reactor fitted with a lid having inlet ports for an agitator, water cooled condenser and for the addition of monomer and initiator solutions. The reactor contents were heated to reflux (approximately 86°C). At reflux, continuous additions of 226 g of acrylic acid and 71 g of styrene were added to the reactor concurrently with stirring over a period of 3 hours. During the same time period and for 30 additional minutes, an initiator solution of 13 grams sodium persulfate dissolved in 80 grams water was added.

At the end of the initiator addition, a 50% aqueous sodium hydroxide solution (226 g) along with 100 grams water was added. The alcohol co-solvent (approximately 200 grams) was removed from the polymer solution by azeotropic distillation under vacuum.

**Reference EXAMPLES 2-11**

Using the procedure described in Example 1, the following copolymers were synthesized -

**TABLE 1 - LIST OF POLYMERS**

| Example Number | Polymer composition | Mole % hydrophobic comonomer |
|---|---|---|
| 2 | Acrylic acid - styrene | 25 |
| 3 | Acrylic acid-styrene | 12 |
| 4 | Acrylic acid - methylmethacrylate | 31 |
| 5 | Acrylic acid-($\alpha$ C12 olefin) | 6 |
| 6 | Acrylic acid-t-butylacrylate | 10 |
| 7 | Acrylic acid - stearyl methacrylate | 2 |
| 8 | Methacrylic acid - methylmethacrylate | 60 |
| 9 | Acrylic acid — t-butylacrylamide | 10 |
| 10 | Acrylic acid - methylmethacrylate | 18 |
| 11 | Acrylic acid - isobutylene | 10 |

**Reference EXAMPLE 12**

Preparation of hydrophobically modified polymer containing 60 mole % acrylic acid and 40 mole % styrene

An initial charge of 86.4 g of deionized water, 79.2 g of isopropyl alcohol, and 0.042 grams of ferrous ammonium sulfate were added to a 1-liter glass reactor. The reactor contents were heated to reflux (approximately 84°C).
At reflux, continuous additions of 64.5 g of acrylic acid, 62.1 g of styrene, 0.1 g of dodecylmercaptan, were added over a period of 3.5 hours. The initiator and chain transfer solutions were added at the same time as the above described monomer solution over a period of 4 hours and 3.25 hours, respectively.

| Initiator solution | |
| --- | --- |
| Sodium persulfate | 5.72 g |
| Water | 14.0 g |
| Hydrogen peroxide 35% | 16.7 g |

| Chain transfer solution | |
| --- | --- |
| 3-mercapto propionic acid, 99.5% | 4.9 g |
| Water | 21.8 g |

After adding the initiator and chain transfer solutions, the reaction temperature was maintained at about 88°C for one hour. The alcohol co-solvent was removed from the polymer solution by azeotropic distillation under vacuum. During the distillation, a mixture of 144 g of deionized water and 64.1 g of a 50% sodium hydroxide solution was added to the polymer solution. A small amount of ANTIFOAM 1400 (0.045 g) was added to suppress any foam generated during distillation. Approximately, 190 g of a mixture of water and isopropyl alcohol was distilled off. After distillation was complete, 25 g of water was added to the reaction mixture, which was cooled to obtain a yellowish amber solution.

**Reference EXAMPLE 13**

Preparation of hydrophobically modified polymer containing 49 mole % acrylic acid and 51 mole % styrene

An initial charge of 195.2 g of deionized water, 279.1 g of isopropyl alcohol, and 0.0949 grams of ferrous ammonium sulfate were added to a 1-liter glass reactor. The reactor contents were heated to reflux (approximately 84°C).
At reflux, continuous additions of 121.4 g of acrylic acid, 175.5 g of styrene, were added over a period of 3.5 hours. The initiator and chain transfer solutions were added at the same time as the above described monomer solution over a period of 4 hours and 3.25 hours, respectively.

| Initiator solution | |
| --- | --- |
| Sodium persulfate | 12.93 g |
| Water | 31.6 g |
| Hydrogen peroxide 35% | 37.8 g |

| Chain transfer solution | |
| --- | --- |
| 3-mercapto propionic acid, 99.5% | 11.1 g |
| Water | 49.3 g |

After adding the initiator and chain transfer solutions, the reaction temperature was maintained at about 88°C for one hour. The alcohol co-solvent was removed from the polymer solution by azeotropic distillation under vacuum. During the distillation, a mixture of 325.6 g of deionized water and 134.8 g of a 50% sodium hydroxide solution was added to the polymer solution. A small amount of ANTIFOAM 1400 (0.10 g) was added to suppress any foam generated during distillation. Approximately, 375.0 g of a mixture of water and isopropyl alcohol was distilled off. After distillation was completed, 25 g of water was added to the reaction mixture, which was cooled to obtain a yellowish amber solution.

**Reference EXAMPLE 14**

Preparation of hydrophobically modified polymer containing 96.1 mole % acrylic acid and 3.9 mole % lauryl methacrylate

An initial charge of 190 g of deionized water and 97.1 g of isopropyl alcohol were added to a 1-liter glass reactor. The reactor contents were heated to reflux (approximately 82°C - 84°C). At reflux continuous additions of 105 g of acrylic acid, and 15.0 g of lauryl methacrylate were added to the reactor concurrently over a 3 hour period of time with stirring. Concurrently, an initiator solution containing 15.9 g of sodium persulfate and 24.0 g of water was added over a period of 4 hours.

The reaction temperature was maintained at 82°C to 85°C for an additional hour. The alcohol co-solvent was removed from the polymer solution by azeotropic distillation under vacuum. At the halfway point of the distillation (when approximately 100 g of distillate is produced), 48 g of hot water was added to the polymer solution to maintain a reasonable polymer viscosity. A small amount of ANTIFOAM 1400 (0.045 g) was added to suppress any foam that may be generated during distillation. Approximately, 200 g of a mixture of water and isopropyl alcohol was distilled off. The distillation was stopped when the isopropyl alcohol level in the reaction product was less than 0.3 weight percent.

The reaction mixture was cooled to less than 40°C and 45 g of water and 105.8 g of a 50% NaOH was added to the reaction mixture with cooling while maintaining a temperature of less than 40°C to prevent hydrolysis of the lauryl methacrylate. The final product was an opaque viscous liquid.

**Reference EXAMPLE 15**

Synthesis of hydrophobically modified polyacrylic acid with a $C_{12}$ chain transfer agent

524.8 g of water and 174 g of isopropyl alcohol were heated in a reactor to 85°C. A mixture of 374 g of acrylic acid and 49 g of n-dodecyl mercaptan were added to the reactor over a period of three hours. After addition was completed, 65.3 g of acrylic acid was added over a period of 30 minutes to the reactor. At the same time, a solution of 17.5 g of sodium persulfate in 175 g of water was added to the reactor over a period of four hours. The temperature of the reactor was maintained at 85 to 95°C for one hour, after which time, 125 g of water, 51 g of a 50% NaOH solution, and 0.07 g of ANTIFOAM 1400, available from Dow Chemical Company, were added to the reactor. The reaction mixture was distilled to remove the isopropyl alcohol. Approximately 300 g of a mixture of isopropyl alcohol and water were distilled off. The reaction mixture was cooled to room temperature and 388 g of a 50% NaOH solution was added.

**Reference EXAMPLE 16**

Synthesis of a copolymer incorporating the monomer containing an unsaturated alkyl hydrophobe

An initial charge of 200 g of deionized water and 200 g of isopropyl alcohol were added to a 2-liter glass reactor. The reactor contents were heated to reflux (approximately 82°C - 84°C). At reflux continuous additions of 213 g of acrylic acid and 16.1 grams of the reaction product of the above Example were added to the reactor concurrently over a 3 hour period of time with stirring. Concurrently, an initiator solution containing 5.0 g of sodium persulfate and 75.0 g of water was added over a period of 4 hours.

The reaction temperature was maintained at 82°C-85°C for an additional hour. The alcohol co-solvent was removed from the polymer solution by azeotropic distillation under vacuum. A small amount of ANTIFOAM 1400 (0.045 g) was added to suppress any foam that may be generated during distillation. A solution containing 213.8 grams of 50% NaOH and 200 grams of deionized water was added during the distillation. Approximately, 300 g of a mixture of water and isopropyl alcohol was distilled off. The distillation was stopped when the isopropyl alcohol level in the reaction product was less than 0.3 weight percent. The final product was a clear amber solution.

**Reference EXAMPLE 17**

Acrylic acid grafted on to a non-ionic surfactant

A polymeric compound was synthesized as follows. 5.0 parts acrylic acid, 3.0 parts of a 15 mole ethylene oxide adduct of nonylphenol nonionic surfactant (commercially available from GAF Corporation as IGEPAL® CO-730) and 0.7 parts sodium hydroxide were dissolved in sufficient water to yield a 100 part aqueous solution. The solution was stirred and heated to 60°C. 1.0 part sodium persulfate was then added to the solution. After several minutes, an exotherm was created as evidenced by a temperature rise to 75°C. Stirring was continued for 90 minutes while maintaining the temperature at 75°C. The resulting solution was cooled and exhibited a clear yellowish color and was slightly acidic.

**Reference EXAMPLE 18**

Preparation of Copolymers containing a surfactant moiety in a Hydrophilic Solvent

In a reactor provided with a stirrer 750 parts by weight deionized water and 250 parts isopropanol were heated to 82°C. A monomer/initiator mixture was made containing 350 parts by weight acrylic acid, 150 parts by weight of an ester of methacrylic acid and an ($C_{16}$-$C_{18}$)alkoxy poly(ethyleneoxy)ethanol having about twenty ethoxy units, and 8 parts by weight methacrylic acid. Five minutes before the monomer/initiator feed began, 2 parts by weight Lupersol 11 (t-butyl peroxypivalate, available from Atofina Chemicals, Inc., Philadelphia, Pennsylvania) were added to the 82°C isopropanol mixture. The monomer/initiator mixture was then metered in over 2 hours, with the reactor contents kept at 82°C. Thereafter, the reactor contents were heated at 82°C for an additional 30 minutes, then cooled, giving a copolymer dissolved in a water/isopropanol mixed solvent.

**Reference EXAMPLE 19**

Molecular modeling of hydrophobic polymers and measuring the interaction energy with a $CaCO_3$ surface

Simulation method:

- Generate models of the each polymer segment.
- Generate models of the cationic surface of the inorganic film.
- Generate several hundred pair configurations by choosing random values for the six spatial variables that describe the relative orientations of two objects.
- Optimize the atomic coordinates of the model by minimizing the molecular potential energy of the system. The coordinates of the inorganic film are fixed at their ideal crystal positions.
- Compute the net interaction energy by subtracting the pair system energy from the energy of an isolated polymer chain and inorganic film slice.

Data generated by the simulation above are provided in Table 2 below:

**TABLE 2 - INTERACTION WITH $CaCO_3$**

| Polymer | Composition | Interaction energy of polymer with $CaCO_3$ (calcite) |
|---|---|---|
| Aquatreat 540 | Sulfonated water treatment copolymer available from Alco Chemical | 66.9 |
| Alcosperse 602N | Polyacrylic acid homopolymer | 72.9 |
| Example 4 | Copolymer of acrylic acid Na salt and methyl methacrylate (31 mole %) | 84.7 |

From the above data it is seen that the polymer of example 4 has a greater attraction for the $CaCO_3$ crystal surface than other polymers such as Alcosperse 602N and Aquatreat 540 traditionally used in water treatment. This implies that such polymers tend to modify the growing crystal surface of $CaCO_3$. This modification of the crystal surface can be visually seen under a microscope. Thus, the fluid treated with such polymers easily removes carbonate deposits in aqueous treatment systems as the fluid flows through the system.

**Reference EXAMPLE 20**

Phosphate inhibition data using 20 ppm orthophosphate and 150 ppm polymer in the aqueous treatment system

Phosphate Inhibition Test Protocol

Solution "A"

Using sodium hydrogen phosphate and sodium tetraborate decahydrate, Solution A was prepared containing 20 mg/L of phosphate, and 98 mg/L of borate at a pH of from 8.0-9.5.

Solution "B"

Using calcium chloride dihydrate and ferrous ammonium sulfate, Solution B was prepared containing 400 mg/L of calcium and 4 mg/L of iron at a pH of from 3.5-7.0.

Anti-scalant Preparation

The total solids or activity for anti-scalant(s) to be evaluated was determined as follows. The weight of anti-scalant necessary to provide a 1.000 g/L (1000 mg/L) solids/active solution was determined using the following formula:

$$(\% \text{ solids or activity})/100\% = \text{"X"}$$

wherein "X" = decimal solids or decimal activity. (1.000 g/L)/"X" = g/L anti-scalant required to yield a 1000 mg/L anti-scalant solution

Sample Preparation

Fifty (50) ml of Solution "B" was dispensed into a 125 ml Erlenmeyer flask using a Brinkman dispensette. Using a graduated pipette, the correct amount of anti-scalant polymer solution was added to give the desired treatment level *(i.e.,* 1 ml of 1000 mg/L anti-scalant solution = 10 mg/L in samples). Fifty (50) ml of Solution "A" was dispensed into the 125 ml Erlenmeyer flask. At least three blanks (samples containing no anti-scalant treatment) were prepared by dispensing 50 ml of Solution "B" and 50 ml of Solution "A" into a 125-ml Erlenmeyer flask. The flasks were then stoppered and placed in a water bath set at 70°C +/-5°C for 16 to 24 hours.

Sample Evaluation

All of the flasks were removed from the water bath and allowed to cool to touch. A vacuum apparatus was assembled using a 250-ml side-arm Edenmeyer flask, vacuum pump, moisture trap, and Gelman filter holder. The samples were filtered using 0.2-micron filter paper. The filtrate from the 250-ml side-arm Erlenmeyer flask was transferred into an unused 100-ml specimen cup. The samples were evaluated for phosphate inhibition using a HACH DR/3000 Spectrophotometer, following the procedure set forth in the operator's manual.

Calculation of Percent Inhibition for All Samples

The percent inhibition for each treatment level is determined by using the following calculation -

$$\% \text{ Phosphate inhibition} = (S/T) * 100$$

wherein S = mg/L Sample Phosphate and T = mg/L Total Phosphate added. The results are provided in Table 3 below.

**TABLE 3 - PHOSPHATE INHIBITION**

| Polymer | Composition | Number average molecular weight | % phosphate inhibition |
|---|---|---|---|
| Alcosperse 149 | Homopolymer of acrylic acid | - | 16.3 |
| Alcogum SL 120 | High molecular weight hydrophobically modified polymer used in rheology modification | 600,000 | 2.0 |
| Aquatreat 540 | Sulfonated water treatment copolymer available from Alco Chemical | - | 33.2 |
| Example 10 | Copolymer of acrylic acid, Na salt and methyl methacrylate (19 mole %) | 2800 | 32.4 |
| Example 1 | Copolymer of acrylic acid, Na salt and styrene (18 mole %) | 8800 | 30.7 |

From the above data it is seen that the polymers of the examples 1 & 10 are excellent phosphate-inhibiti ng agents and perform as well as the commercial sulfonated copolymers. Furthermore, high molecular weight polymers used in rheology modification do not minimize scale.

**EXAMPLE 21**

Aqueous process to produce a hydrophobically modified copolymer

150 g of water was heated in a reactor to 95°C. A mixture of 189 g of acrylic acid and 68 g of methyl methacrylate were added to the reactor over a period of three hours. At the same time, a solution of 13.3 g of sodium persulfate in 80 g of water was added to the reactor over a period of 3.5 hours. Concurrently, 189 g of a 50% NaOH solution dissolved in 200 grams water was added over 3 hours. The temperature of the reactor was maintained at 95°C for one hour, after which time, an amber solution of the polymer was obtained.

**EXAMPLE 22**

Aqueous process to produce a hydrophobically modified copolymer

350 g of water and 189 grams of a 50% NaOH solution was heated in a reactor to 95°C. A mixture of 189 g of acrylic acid and 68 g of methyl methacrylate were added to the reactor over a period of three hours. At the same time, a solution of 13.3 g of sodium persulfate in 80 g of water was added to the reactor over a period of 3.5 hours. The temperature of the reactor was maintained at 95°C for one hour, after which time, an amber solution of the polymer was obtained.

**EXAMPLE 23**

Aqueous process to produce a hydrophobically modified copolymer

150 g of water was heated in a reactor to 95°C. A mixture of 189 g of acrylic acid and 40 g of styrene were added to the reactor over a period of three hours. At the same time, a solution of 13.3 g of sodium persulfate in 80 g of water was added to the reactor over a period of 3.5 hours. Concurrently, 189 g of a 50% NaOH solution dissolved in 200 grams water was added over 3 hours. The temperature of the reactor was maintained at 95°C for one hour, after which time, an amber solution of the polymer was obtained.

## EXAMPLE 24

Aqueous process to produce a hydrophobically modified copolymer

400 g of water along with 39.2 grams of maleic anhydride, 12.8 grams of 50% NaOH and 0.025 grams of ferrous ammonium sulfate hexahydrate was heated in a reactor to 100°C. A mixture of 230 g of acrylic acid and 42 g of styrene were added to the reactor over a period of four hours. At the same time, a solution of 12 g of sodium persulfate and 75 grams of 35% hydrogen peroxide dissolved in 100 g of water was added to the reactor over a period of 4.5 hours. The temperature of the reactor was maintained at 100°C for two hours, after which time a light yellow solution of the polymer was obtained.

## FORMULATION EXAMPLES

The following examples illustrate various formulations having a hydrophobically modified polymer for use in different aqueous systems -

## Reference EXAMPLE 25

Typical Hard surface cleaning formulations

### Acid Cleaner

| Ingredient | wt % |
|---|---|
| Citric acid (50% solution) | 12.0 |
| Phosphoric acid | 1.0 |
| $C_{12}$-$C_{15}$ linear alcohol ethoxylate with 3 moles of EO | 5.0 |
| Alkyl benzene sulfonic acid | 3.0 |
| Polymer of Example 4 | 1.0 |
| Water | 78.0 |

### Alkaline Cleaner

| Ingredient | wt % |
|---|---|
| Water | 89.0 |
| Sodium tripolyphosphate | 2.0 |
| Sodium silicate | 1.9 |
| NaOH (50%) | 0.1 |
| Dipropylene glycol monomethyl ether | 5.0 |
| Octyl polyethoxyethanol, 12-13 moles EO | 1.0 |
| Polymer of example 9 | 1.0 |

Polymers according to the examples 4 and 9 provide cleaning benefits at lower surfactant concentrations, faster drying and better gloss properties to the above hard surface cleaning formulations.

## Reference EXAMPLE 26

### Automatic dishwash powder formulation

| Ingredients | wt % |
|---|---|
| Sodium tripolyphosphate | 25.0 |
| Sodium carbonate | 25.0 |

(continued)

| Ingredients | wt % |
|---|---|
| C12-15 linear alcohol ethoxylate with 7 moles of EO | 3.0 |
| Polymer of Example 11 | 4.0 |
| Sodium sulfate | 43.0 |

**EXAMPLE 27**

Automatic dishwash gel formulation

| Ingredients | wt % |
|---|---|
| Sodium tripolyphosphate | 20 |
| Sodium carbonate | 5 |
| Sodium silicate | 5 |
| Sodium hypochlorite | 1 |
| Polymeric thickener | 2 |
| Polymer of Example 23 | 3 |
| Water, caustic for pH adjustment, minors | Balance |

**Reference EXAMPLE 28**

Solutions of 2% NaOCl (hypochlorite bleach) were prepared for time stability testing of polymers. The polymer dosage in these solutions was 1% (dry polymer on solution), and the initial pH was adjusted to 12.5 with 20% NaOH. Samples were stored both at room temperature and at 50°C. The percent hypochlorite was measured after a week by standard titration.

**TABLE 4 - AGING STABILITY**

| Polymer | % NaOCl after 1 week at room temperature | % NaOCl after 1 week at 50C |
|---|---|---|
| None | 1.9 | 1.7 |
| Example 1 | 1.9 | 1.7 |
| Commercial sulfonated polymer[*] | 1 | 0.2 |
| [*] Aquatreat 540, available from Alco Chemical, Chattanooga, Tennessee. | | |

The data indicate that the polymer of example 1 is stable in high pH and bleach environment used in Autodish gels. However, the commercial sulfonated polymer is not as evidenced by the drop in hypochlorite levels with aging.

**Reference EXAMPLE 29-32**

Water treatment compositions

Once prepared, the water-soluble polymers are preferably incorporated into a water treatment composition comprising the water-soluble polymer and other water treatment chemicals. Such other chemicals include corrosion inhibitors such as orthophosphates, zinc compounds and tolyl triazole. As indicated above, the level of the inventive polymer utilized in the water treatment compositions is determined by the treatment level desired for the particular aqueous system treated. The water treatment compositions generally comprise from 10 to 25 percent by weight of the water-soluble polymer. Conventional water treatment compositions are known to those skilled in the art and exemplary water treatment compositions are set forth below. These compositions containing the polymer of examples 1, 5 and 10 have application in, for example, the oil field.

| Formulation 1 | | Formulation 2 | |
|---|---|---|---|
| 11.3% | Polymer 1 (40% active) | 11.3% | Polymer 5 (40% active) |

(continued)

|  | Formulation 1 |  | Formulation 2 |
|---|---|---|---|
| 47.7% | Water | 59.6% | Water |
| 4.2% | HEDP | 4.2% | HEDP |
| 10.3% | NaOH | 18.4% | TKPP |
| 24.5% | Sodium Molybdate | 7.2% | NaOH |
| 2.0% | Tolyl triazole | 2.0% | Tolyl triazole |
| pH | 13.0 | pH | 12.64 |

|  | Formulation 3 |  | Formulation 4 |
|---|---|---|---|
| 22.6% | Polymer 10 (40% active) | 11.3% | Polymer 1 (40% active) |
| 51.1% | Water | 59.0% | Water |
| 8.3% | HEDP | 4.2% | HEDP |
| 14.0% | NaOH | 19.3% | NaOH |
| 4.0% | Tolyl triazole | 2.0% | Tolyl triazole |
| pH | 12.5 | 4.2% | $ZnCl_2$ |
|  |  | pH | 13.2 |

where HEDP is 1-hydroxyethylidene-1,1 diphosphonic acid and TKPP is tri-potassium polyphosphate.

**Reference EXAMPLE 33**

Cement composition

Various quantities of the polymer produced as described in Example 1 above (a 9% by weight aqueous solution of the polymer) were added to test portions of a base cement slurry. The base cement composition included Lone Star Class H hydraulic cement and water in an amount of 38% by weight of dry cement. The base composition had a density of 16.4 pounds per gallon. These compositions containing the polymer of example 1 have application in, for example, the oil field.

**Reference EXAMPLE 34**

Copolymer of a sulfonated monomer and a hydrophobe

An initial charge of 100 g of deionized water and 50 g of isopropyl alcohol were added to a 1-liter glass reactor. The reactor contents were heated to reflux (approximately 84°C). At reflux, 100 grams of 2-acrylamido-2-methylpropane sulfonic acid dissolved in 150 grams of water and 50 g of styrene dissolved in 116 grams isopropanol was added continuously in 2 separate streams over 1.5 hours. Concurrently, 10 grams of sodium persulfate dissolved in 116 grams of water was added over 2 hours.

The reaction temperature was maintained at about 88°C for one hour. The alcohol co-solvent was removed from the polymer solution by azeotropic distillation under vacuum. During the distillation, a mixture of 190 g of deionized water and 38 g of a 50% sodium hydroxide solution was added to the polymer solution. A small amount of ANTIFOAM 1400 (0.10 g) was added to suppress any foam generated during distillation. Approximately, 280 g of a mixture of water and isopropyl alcohol was distilled off. The final solution was an opaque white material.

**Reference EXAMPLE 35**

Aqueous process to produce a hydrophobically modified copolymer using a hydrophilic chain transfer agent

400 g of water was heated in a reactor to 100°C. A mixture of 230 g of acrylic acid and 42 g of styrene were added to the reactor over a period of four hours. At the same time, a solution of 12 g of sodium persulfate and 15 grams of sodium hypophosphite hexahydrate (hydrophilic chain transfer agent) dissolved in 100 g of water was added to the reactor over a period of 4.5 hours. The temperature of the reactor was maintained at 100°C for two hours and then 230 grams of a 50% solution of NaOH was added. A light yellow solution of the polymer was obtained.

**Reference EXAMPLE 36**

Water treatment application for scale minimization without inhibition

The polymers of examples 1 and 10 were evaluated in a standard Nace test for calcium carbonate inhibition.

### TABLE 5 - CALCIUM CARBONATE INHIBITION

| Polymer | Composition | % calcium carbonate inhibition |
|---|---|---|
| Alcosperse 149 | Homopolymer of acrylic acid | 80 |
| Example 10 | Copolymer of acrylic acid, Na salt and methyl methacrylate (19 mole %) | 15 |
| Example 1 | Copolymer of acrylic acid, Na salt and styrene (18 mole %) | 16 |

The above data would seem to indicate that polymers of examples 1 and 10 are not good at inhibiting calcium carbonate scale as measured by laboratory beaker tests. However, these polymers were then evaluated in a dynamic system that mimics a pilot cooling tower. The test utilized 2.5 cycles of hardness in the beginning, which was then increased to 7 cycles of hardness during the test. One cycle of hardness is approximately equal to 40 ppm Ca "as Ca", 12.5 ppm Mg "as Mg", 120 ppm $HCO_3$ and 40 ppm $CO_3$. Orthophosphate was also included at 5 and 10 ppm levels at various times. The rods in the test rig were judged by the following scale:

0=   no scale on rods
1=   scale on dead flow areas only
2=   light scale on rods
3=   moderate scale on rods
4=   heavy scale on rods.

### TABLE 6 - CALCIUM SCALE FORMATION

| Time | Scale Formation Result with Alcosperse 149 dosed at 20 ppm | Scale Formation Result with Example 1 Polymer dosed at 20 ppm | Scale Formation Result with Example 10 Polymer dosed at 20 ppm | Comments |
|---|---|---|---|---|
| Day 1 12:30 PM | 0 | 0 | 0 | |
| Day 4 9:30 AM | 1 | 1 | 1 | |
| Day 4 10 : 45 AM | 2 | 1 | 1 | 2.5 cycle of feed start with 10 ppm $PO_4$ |
| Day 4 4:00 PM | 3 | 1 | 1 | |
| Day 5 12:00 AM | 4 | 1 | 1 | |
| Day 6 11:45 AM | 4 | 1 | 1 | |
| Day 6 12:30 PM | 4 | 1 | 1 | Start 7 cycles of feed |
| Day 7 8:00 AM | 4 | 2 | 1 | |
| Day 7 11:30 PM | 4 | 2 | 1 | |
| Day 8 9:45 AM | 4 | 2 | 1 | |
| Day 8 5:30 PM | 4 | 2 | 1 | |
| Day 8 10:00 PM | 4 | 3 | 1 | |
| Day 9 7:00 PM | 4 | 3 | 1 | |
| Day 10 9:45 PM | 4 | 3 | 1 | |

The above data indicates that even though polymers according to examples 1 and 10 do not function well in inhibiting $CaCO_3$ (according to Table 5 above), they perform very well in actual water treatment conditions at preventing calcium scale formation. This is ascribed to the fact that these polymers function in modifying crystal growth modifiers. Hence, they minimize $CaCO_3$ scale formation even though they are not good $CaCO_3$ inhibitors.

**Reference EXAMPLE 37**

Acetate Buffered Static Barium Sulfate Inhibition Efficiency Test

The following test was used to determine the static barium sulfate inhibition efficiency:
1. Prepare two brine solutions by dissolving the appropriate salts in distilled water.

| Ion | Formation Water (FW) | Sea Water (SW) |
|---|---|---|
| Sodium | 31,275 | 10,890 |
| Calcium | 5,038 | 428 |
| Potassium | 654 | 460 |
| Magnesium | 739 | 1,368 |
| Barium | 269 | 0 |
| Strontium | 71 | 0 |
| Sulfate | 0 | 2,960 |

2. Filter the brines through 0.45 $\mu$m membrane filters.
3. Dissolve the scale inhibitor (SI) in the filtered seawater (SW) to 10000 ppm (as active SI). Filter this solution through 0.45 $\mu$m membrane filter.
4. The inhibitor solution is then diluted further into SW to give the required concentration for the particular test and each inhibitor concentration is tested in duplicate. (Note: the concentration of inhibitor in each seawater solution must be higher than that required for the test by a factor which accounts for the dilution when mixed with the formation water.)
5. Pour the appropriate volume (50 ml) of inhibitor/seawater solution into 150 ml high-density polyethylene (HDPE) bottles.
6. Pour the appropriate volume (50 ml) of formation water into 150 ml HDPE bottles so as to give 100 ml when mixed in the required ratio (1:1).
7. Add 1 ml (1 ml buffer/100 ml final brine mixture) of buffer solution to the brine containing the inhibitor, taking extreme care not to introduce impurities and cap all bottles securely. The buffer solution is an acetic acid/sodium acetate buffer solution prepared in order to give the required pH. For example in order to obtain a pH of approximately 5.5, the buffer solution is prepared by dissolving the following amounts of Analar grade reagents into 100 ml of distilled water: 13.50 g sodium acetate tri-hydrate+0.35 g acetic acid
(Note: *It is important to check the effectiveness of the buffer system prior to commencement of a particular set of tests, in order to ensure that the required pH is obtained following addition of the buffer to the mixed brine system. This may often lead to small modifications of the buffer system prior to use.)
8. Place the bottles containing the inhibitor solutions into a water bath and the bottles containing formation water (FW) in a oven at the appropriate test temperature for 60 minutes in order to reach thermal equilibrium.
9. Mix the two Brines together (by pouring the FW into the SW and quickly shaking.) Start a stopclock (t=0). The bottles are then replaced into the water bath at test temperature.
10. The tests are then sampled at the required time (t=2, 20 hours) by pipetting 1 ml of the supernatant into either 9 ml or 4 ml of 3000 ppm KCl and 1000 ppm polymer solution depending on the brine system under examination.
Test conditions: Brine mixture 50:50 Forties type FW/SW, temperature 90°C, pH 5.5, sampling time 2 and 20 hours.
Sampling and Analysis: The sampling procedure is carried out as follows: A stabilizing/dilution solution is made containing 1,000 ppm commercial polyvinyl sulfonate scale inhibitor (PVS) and 3,000 ppm potassium (as KCl) in distilled water. The solution of 1,000 ppm PVS has been shown to effectively stabilize (or quench) the sample and thus prevent further precipitation, when used as described below. The potassium is included in this solution to act as an ionization suppressant for the Atomic Absorption determination of barium.
For these tests, either 4 or 9 ml (depending on the brine system) of the KCl/PVS stabilizing solution was pipetted into a test tube at room temperature prior to sampling. 1 ml of the particular test supernatant was then removed from the test bottles using an automatic pipette, taking care not to disturb any settled precipitate and immediately added to the 4 or 9 ml of stabilizing solution. The samples were then analyzed by Atomic Absorption Spectroscopy (AA) for barium.

The barium sulfate inhibition efficiencies are then calculated using the following equation:

$$\% \text{ Efficiency} = \frac{(M_B - M_1)}{M_B} \times 100 = \frac{(C_O - C_B) - (C_O - C_1)}{C_O - C_B} \times 100 = \frac{C_1 - C_B}{C_O - C_B} \times 100$$

.

where

$M_B$ = Mass Barium precipitated in supersaturated blank solution;
$M_1$ = Mass Barium precipitated in test solution;
$C_O$ = Concentration of Barium originally in solution (i.e. t=0);
$C_1$ = Concentration of Barium at sampling;
$C_B$ = Concentration of Barium in the blank solution (no inhibitor) at the same conditions and sampling time as $C_1$ above; and
$(t)$ = Sampling time.

The polymeric inhibitors were tested in the procedure of detailed above at 15 ppm with the following results. The scale inhibitor compositions produced using Example 4 performed better than the control (no polymer).

One skilled in the art will recognize that polymers according to the present invention can be optimized for a particular aqueous composition.

## EXAMPLE 38

Aqueous process for producing a hydrophobically modified copolymer using a hydrotrope

400 g of water and 200 g of xylene sulfonic acid (hydrotrope) was heated in a reactor to 100°C. A mixture of 200 g of acrylic acid and 72 g of styrene were added to the reactor over a period of four hours. At the same time, a solution of 12 g of sodium persulfate dissolved in 100 g of water was added to the reactor over a period of 4.5 hours. The temperature of the reactor was maintained at 100°C for two hours and then 200 g of a 50% solution of NaOH was added. A light yellow solution of the polymer was obtained.

## Reference EXAMPLE 39

Synthesis of hydrophobically modified polymethacrylic acid

290 g of water and 132 g of isopropyl alcohol were heated to 85°C in a reactor. A mixture of 161 g of methacrylic acid and 65 g of styrene were added to the reactor over a period of 3.5 hours. During this time period, 8.2 g of 3-mercaptopropionic acid dissolved in 50 grams of water was added over a period of 3 hours. At the same time, a solution of 9.5 g of sodium persulfate and 23 grams of 35% hydrogen peroxide dissolved in 28 g of water was added to the reactor over a period of four hours. The temperature of the reactor was maintained at 85°C for one hour, after which 165 g of water, 165 g of a 50% NaOH solution, and 0.07 g of ANTIFOAM 1400 (available from Dow Chemical Company, Midland, Michigan) were added to the reactor. The reaction mixture was distilled to remove the isopropyl alcohol. Approximately 260 g of a mixture of isopropyl alcohol and water were distilled off.

## EXAMPLE 40

Evaluation of Example 39 polymer in a kaolin clay dispersancy test

A 2% solution of kaolin clay was prepared and separated into different containers. 0.1% of the Example 39 polymer was added to one container. The solution was stirred for 10 minutes and then poured into 100 ml volumetric cylinders. After allowing the solution to sit for one hour, the cylinders were observed for dispersancy of the clay. Dispersant solutions containing the Example 39 polymer exhibited all the kaolin clay evenly dispersed throughout the column. However, solutions prepared without the polymer had all of clay settled at the bottom of the cylinder. This test indicates that polymers according to example 39 aid in dispersing pigments such as kaolin clay.

**Reference EXAMPLE 41**

Synthesis of hydrophobically modified copolymer of methacrylic acid and acrylic acid

230 g of water and 120 g of isopropyl alcohol were heated in a reactor to 85°C. A mixture of 110 g of methacrylic acid, 92 grams of methyl methacrylate and 53 grams of methacrylic acid were added to the reactor over a period of 3.5 hours. At the same time, a solution of 13 g of sodium persulfate dissolved in 80 g of water was added to the reactor over a period of four hours. The temperature of the reactor was maintained at 85°C for one hour. The reaction mixture was distilled to remove the isopropyl alcohol. Approximately 160 g of a mixture of isopropyl alcohol and water were distilled off.

**Reference EXAMPLES 42-44**

The polymer compositions described in the Table below were synthesized in a procedure similar to the one described in Example 41. These polymers were then evaluated according to the calcium phosphate inhibition test of Example 20.

| Polymer | Mole % acrylic acid | Mole % methyl methacrylate | Mole % methacrylic acid | Percent phosphate inhibition at different ppm levels of polymer | | |
|---|---|---|---|---|---|---|
| | | | | 19 ppm | 21 ppm | 25 ppm |
| Control (no polymer) | - | - | - | 0 | 0 | 0 |
| 42 | 65 | 10 | 25 | 14 | 81 | 94 |
| 43 | 40 | 20 | 40 | 15 | 43 | 93 |
| 44 | 50 | 10 | 40 | 87 | 90 | 92 |

The above data indicates that hydrophobically modified polymers comprising mixtures of carboxylic acid monomers are excellent calcium phosphate inhibitors.

Although the present invention has been described and illustrated in detail, it is to be understood that the same is by way of illustration and example only, and is not to be taken as a limitation. The scope of the present invention are to be limited only by the terms of any claims presented hereafter.

**Claims**

1. A aqueous profess free of non-aqueous solvents for producing hydrophobic copolymers comprising:

    - adding two or more monomers into an aqueous system,
    - wherein at least one monomer is at least one hydrophilic add monomer and at least one monomer is a hydrophabic monomer comprising styrene, $\alpha$-mgtlylstyrene, methyl methacrylate, methyl acylate, 2-ethylhexyl acrylate, octyl acrylate, lauryl acrylate, stearyl acrylate, behenyl acryate, 2-ethythexyl methacrylate, octyl methacrylate, lauryl methacrylate, stearyl methacrylate, behenyl methacrylate, 2-ethylhexyl acrylamide, octyl acrylamide, lauryl stearyl actylamide, behenyl acrylamide, propyl acrylate, butyl acrylate, pentyl acrylate, hexyl acrylate, 1-vinyl naphthalene, 2-vinyl naphthalene, 3-methyl styrene, 4-propyl styrene, t-butyl styrene, 4-cyclohexyl styrene, 4-dodecyl styrene, 2-ethyl-4-benyl styrene, 4-(phenyl butyl) styrene or combinations and wherein the hydrophobic monomer is present in an amount of 1 mole % to 80 mole %, and
    - initiating the system by free radical polymerization of the two or more monomers,
    - wherein the polymer is neutralized as it is formed.

2. Process according to claim 1, wherein the neutralizing agent is added concurrently with the monomer feeds.

3. Process according to anyone of the preceding claims, wherein the at least one hydrophilic acid monomer is a carboxylic acid functionality selected from the group consisting of acrylic acid, methacrylic acid, ethacrylic acid, $\alpha$-chloro-acrylic acid, $\alpha$-cyano acrylic acid, $\beta$-methyl acrylic acid (crotonic acid), $\alpha$-phenyl acrylic acid, $\beta$-acryloxy propionic acid, sorbic acid, $\alpha$-chloro sorbic add, angelic acid, cinnamic acid, p-chloro cinnamic acid, $\beta$-styryl acrylic

acid (1-carboxy-4-phenyl butadiene-1,3), itaconic acid, maleic acid, citraconic acid, mesaconic acid, glutaconic acid, aconitic acid, fumaric acid, tricarboxy ethylene, 2-acryloxypropionic acid, maleic anhydride or maleic acrylamide, or their carboxylic acid containing derivatives, and combinations thereof.

4. Process according to anyone of the preceding claims, wherein the at least one hydrophilic functionality further comprises at least one water soluble chain transfer agent comprising short chain mercaptans, phosphorous-based chain transfer agents or combinations thereof.

**Patentansprüche**

1. Ein wässriges Verfahren frei von nicht-wässrigen Lösungsmitteln zur Herstellung hydrophober Copolymere, umfassend:

   - Zugabe von zwei oder mehr Monomeren zu einem wässrigen System;
   - wobei mindestens ein Monomer mindestens ein hydrophiles Säuremonomer ist und mindestens ein Monomer ein hydrophobes Monomer ist, das Styrol, α-Methylstyrol, Methylmethacrylat, Methylacrylat, 2-Ethylhexylacrylat, Octylacrylat, Laurylacrylat, Stearylacrylat, **Behenylacrylat,** 2-Ethylhexylmethacrylat, Octylmethacrylat, Laurylmethacrylat, Stearylmethacrylat, Behenylmethacrylat, 2-Ethylhexylacrylamid, Octylacrylamid, Laurylacrylamid, Stearylacrylamid, Behenylacrylamid, Propylacrylat, Butylacrylat, Pentylacrylat, Hexylacrylat, 1-Vinylnaphthalin, 2-Vinylnaphthalin, 3-Methylstyrol, 4-Propylstyrol, t-Butylstyrol, 4-Cyclohexylstyrol, 4-Dodecylstyrol, 2-Ethyl-4-benzylstyrol, 4-(Phenylbutyl)styrol oder Kombinationen davon umfasst und wobei das hydrophobe Monomer in einer Menge von 1 Mol-% bis 80 Mol-% vorliegt; und
   - Starten des Systems durch radikalische Polymerisation der zwei oder mehr Monomere;
   - wobei das Polymer bei seiner Bildung neutralisiert wird.

2. Verfahren nach Anspruch 1, wobei das Neutralisationsmittel gleichzeitig mit den Monomerbeschickungen zugegeben wird.

3. Verfahren nach einem der vorhergehenden Ansprüche, wobei das mindestens eine hydrophile Säuremonomer eine Carbonsäurefunktionalität, ausgewählt aus der Gruppe bestehend aus Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, Angelikasäure, Zimtsäure, p-Chlorzimtsäure, β-Styrylacrylsäure (1-Carboxy-4-phenylbutadien-1,3), Itaconsäure, Maleinsäure, Citraconsäure, Mesaconsäure, Glutaconsäure, Aconitsäure, Fumarsäure, Tricarboxyethylen, 2-Acryloxypropionsäure, Maleinsäureanhydrid oder Maleinacrylamid oder deren Carbonsäure enthaltenden Derivaten und Kombinationen davon, ist.

4. Verfahren nach einem der vorhergehenden Ansprüche, wobei die mindestens eine hydrophile Funktionalität weiter mindestens ein wasserlösliches Kettenübertragungsmittel umfasst, welches kurzkettige Mercaptane, Kettenübertragungsmittel auf Phosphorbasis oder Kombinationen davon umfasst.

**Revendications**

1. Procédé en phase aqueuse dépourvu de solvants non aqueux pour produire des copolymères hydrophobes comprenant les étapes consistant à :

   - ajouter deux monomères ou plus dans un système aqueux,
   - où au moins un monomère est au moins un monomère acide hydrophile et au moins un monomère est un monomère hydrophobe comprenant le styrène, l'a-méthylstyrène, le méthacrylate de méthyle, l'acrylate de méthyle, l'acrylate de 2-éthylhexyle, l'acrylate d'octyle, l'acrylate de lauryle, l'acrylate de stéaryle, l'acrylate de béhényle, le méthacrylate de 2-éthylhexyle, le méthacrylate d'octyle, le méthacrylate de lauryle, le méthacrylate de stéaryle, le méthacrylate de béhényle, le 2-éthylhexyl acrylamide, l'octyl acrylamide, le lauryl acrylamide, le stéaryl acrylamide, le béhényl acrylamide, l'acrylate de propyle, l'acrylate de butyle, l'acrylate de pentyle, l'acrylate d'hexyle, le 1-vinyl naphtalène, le 2-vinyl naphtalène, le 3-méthyl styrène, le 4-propyl styrène, le t-butyl styrène, le 4-cyclohexyl styrène, le 4-dodécyl styrène, le 2-éthyl-4-benzyl styrène, le 4-(phényl butyl) styrène, ou leurs combinaisons, et où le monomère hydrophobe est présent dans une quantité de 1 % en mole à 80 % en mole, et

- initier le système par polymérisation par radicaux libres des deux monomères ou plus,
- où le polymère est neutralisé à mesure qu'il est formé.

2. Procédé selon la revendication 1, dans lequel l'agent de neutralisation est ajouté simultanément avec les alimentations en monomère.

3. Procédé selon l'une quelconque des revendications précédentes, dans lequel le au moins un monomère acide hydrophile est une fonctionnalité acide carboxylique choisie dans le groupe consistant en l'acide acrylique, l'acide méthacrylique, l'acide éthacrylique, l'acide α-chloro-acrylique, l'acide α-cyano-acrylique, l'acide β-méthyl acrylique (acide crotonique), l'acide α-phényl acrylique, l'acide β-acryloxy propionique, l'acide sorbique, l'acide a-chlorosorbique, l'acide angélique, l'acide cinnamique, l'acide p-chloro cinnamique, l'acide β-styryl acrylique (1-carboxy-4-phényl butadiène-1,3), l'acide itaconique, l'acide maléique, l'acide citraconique, l'acide mésaconique, l'acide glutaconique, l'acide aconitique, l'acide fumarique, le tricarboxy éthylène, l'acide 2-acryloxypropionique, l'anhydride maléique ou l'acrylamide maléique ou leurs dérivés contenant acide carboxylique, et leurs combinaisons.

4. Procédé selon l'une quelconque des revendications précédentes, dans lequel la au moins une fonctionnalité hydrophile comprend en outre au moins un agent de transfert de chaîne soluble dans l'eau comprenant des mercaptans à courte chaîne, des agents de transfert de chaîne à base de phosphore, ou leurs combinaisons.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5547612 A
- US 5698512 A
- US 4711725 A
- US 6114294 A
- US 6395185 B
- US 6617302 B
- WO 2004061067 A
- US 5866076 A
- US 5789571 A
- US 5650473 A
- US 2003072950 A